# EUROPÄISCHE PATENTSCHRIFT

(11) **EP 2 392 446 B1**
(45) Veröffentlichungstag und Bekanntmachung des Hinweises auf die Patenterteilung: **25.09.2019**
(21) Anmeldenummer: 11168841.2
(22) Anmeldetag: 06.06.2011
(51) Int. Cl.: B29C 48/92

(54) **KOGNITIVES TECHNISCHES SYSTEM ZUR HERSTELLUNG VON KUNSTSTOFFERZEUGNISSEN**
COGNITIVE TECHNICAL SYSTEM FOR PRODUCING PLASTIC PRODUCTS
SYSTÈME TECHNIQUE COGNITIF DESTINÉ À LA FABRICATION DE PRODUITS EN MATIÈRE PLASTIQUE

(30) Priorität: 07.06.2010 DE 102010029757
(43) Veröffentlichungstag der Anmeldung: 07.12.2011
(73) Patentinhaber: battenfeld-cincinnati Germany GmbH, 32547 Bad Oeynhausen (DE)
(72) Erfinder: Dr. Seibel, Stefan, 83457 Bayerisch Gmain (DE); Becker, Klaus, 32584 Löhne (DE); Sasse, Miriam, 32257 Bünde (DE)

(56) Entgegenhaltungen:
- EP-A1- 1 166 994
- WO-A2-2009/143840
- DE-A1-102004 026 640
- DE-A1-102004 026 641
- DE-A1-102005 020 352
- US-A1- 2006 200 259
- GUO P ET AL: "Polymer extrusion production control using active recognition and adaptive control system", PROCEEDINGS OF THE INTERNATIONAL CONFERENCE ON FUZZY SYSTEMS. SAN FRANCISCO, MAR. 28 - APR. 1, 1993; [PROCEEDINGS OF THE INTERNATIONAL CONFERENCE ON FUZZY SYSTEMS], NEW YORK, IEEE, US, Bd. CONF. 2, 28. März 1993 (1993-03-28), Seiten 779-784, XP010104134, DOI: 10.1109/FUZZY.1993.327541 ISBN: 978-0-7803-0614-1

## Beschreibung

Die Erfindung betrifft ein Verfahren zur Optimierung der Produktqualität und/oder der Anlagenauslastung in Abhängigkeit vorgegebener Parameter, wobei als vorgegebene Parameter für die Produktqualität optische, mechanische und/oder geometrischen Produktqualitätsgrößen und als vorgegebene Parameter für die Anlagenausnutzung Energieeintrag und Energieaustrag sind, wobei anhand weiterer Eingangsgrößen die Optimierung vorgenommen wird.

Mit den Anfängen der Kunststoffextrusion wurde auch an der Maschinenkontrolle weiterentwickelt. Schon die allerersten Patente zur Rohrextrusion wie die GB 155016A beschäftigten sich mit der Optimierung von Maschinen zur Extrusion. Um Temperaturen zu messen werden Sensoren in die Heizvorrichtung und in die nahen Oberflächen der Zylinderinnenwände eingebracht. Später kommen automatisierte Temperatur- und Druckregelsysteme zur Verwendung wie es beispielsweise in der JP 58126133A ausgeführt ist. Durchsatzmessungen wie gemäß der US 3704972A1 oder Wanddickemessung zur Qualitätssicherung wie in der DE 2612993A1 beschrieben oder Auswertesystem nach der Fuzzy-Logik wie in der DE 19503508 offenbart zeigen, dass es ein großes Anliegen der Extruderhersteller ist, die von ihnen angebotenen Systeme so auszustatten, dass ein Optimierung des Prozesses ermöglicht wird. Schutzrechtsameldungen wie die DE 19518804 A1 zeigen die Versuche der Industrie dies mit weiteren Verfahren, wie die Einbindung in neuronale Netze umzusetzen.

Aus der DE 10 2004 026640 A1 ist ein Verfahren bekannt bei dem mittels der Neuro-Fuzzy-Technologie eine vernetzte Steuerung eine Extrusionsblasanlage möglichst automatisch kontrolliert wird. Dies geschieht über die Selbstregelung der Neuro-Fuzzy-Technologie, wobei diese keine weiteren Einflüsse berücksichtigen kann.

Der Artikel **"Polymer Extrusion Production Control"** beschreibt ebenfalls ein selbstregelnde Steuerung. Hier wird auch auf eine Fuzzy-Logig abgestellt bei der auch keine weiteren Parameter zur Auswertung herangezogen werden können.

Es wird weiterhin auf die WO 2009/143840 A2 verwiesen aus der es bekannt ist bei einer Kaugummi-Produktionsanlage ein regelbares Expertensytem mit Algorithmen einzusetzen.

Aus der DE 10 2005 020 352 A1 ist weiterhin bekannt einen Produktionsprozess technischer Bauteile über ein technologisches Verfahren zu beinflussen. Diese Beiflussung erfolgt die Auswertung von Skalararmen einelner Parameter und deren Gegenüberstellung.

**Aufgabe** der vorliegenden Erfindung ist es daher ein Verfahren zur Optimierung der Produktqualität und/oder der Anlagenauslastung mittels intelligenter technischen Methoden anzubieten.

Die Aufgabe wird mit den Merkmalen des Anspruchs 1 gelöst.

Zu den Elementen der Extrusionslinie gehören zum Beispiel ein elektronisches/ optisches/ funkgesteuertes Strecken-Netzwerk welches miteinander verbundenen ist. Dieses Strecken-Netzwerk kann die Elemente Extruder, ein Extrusionswerkzeug/ Formwerkzeug, eine Kalibrierungseinrichtung, einen Vakuumtank, eine Trenneinrichtung, einen Abzug, einen Stapelautomat, einen Wickler, einen Muffautomat, eine Kennzeichnungs-/ Signierungseinrichtung, eine Einrichtung zur optischen Raumformvermessung, eine Einrichtung zur Wanddicken- und/oder Ovalitätsmessung umfassen.

Das Strecken-Netzwerk ist auch wenigstens mit einer elektronischen Materialdatenbank, einem elektronischen Fertigungsplanungssystem, einer elektronischen Prozessparameterdatenbank, einem Expertensystem, einer elektronischen Rechnereinheit für die Analyse von Produktionsprozessen, einer elektronischen Qualitäts- und Fehlerdatenbank, einer elektronische Rechnereinheit zur Erfassung von Qualitäts- Prüfdaten verbunden.

Durch diese Lösung wird erreicht, dass mittels intelligenter technischer Methoden die Produktqualität, die Anlagenauslastung und/oder die Anlageneffizienz individuell auf Kundenspezifikas optimierbar sind.

Es ist also vorgesehen, dass seitens des Anwenders (Kunden) Parameter für die Produktqualitätsgrößen vorgegeben werden. Der Anwender kann beispielsweise Glanzgrad, Farbhomogenität (Pigmentverteilung), Streifigkeit, Rauheit, Transparenz als optische und/oder Zugfestigkeit, Rissausbreitung, Schlagzähigkeit, Schrumpf, als mechanische und/oder Bogenlauf, geometrische Form, Ovalität, Durchmesser, Wanddicke, Schichtdickenverteilung, als geometrische Produktqualitätsgrößen vorgeben.

Weiterhin ist vorgesehen, dass seitens des Anwenders (Kunden) Parameter für die Anlagenauslastung vorgegeben werden können. Dies kann beispielsweise Durchsatz/Liniengeschwindigkeit, Drehmoment, spezifischer Energieeintrag, Drehzahl und/oder Kühlleistung sein.

Im Verfahren zur Optimierung werden diese Produktqualitätsgrößen und/oder Parameter für die Anlagenauslastung im laufenden Prozess überwacht und mittels der intelligenten technischen Methoden eine Mehrzahl von elektronisch steuerbarer Prozessparameter ständig optimiert, um die vorgegebenen Produktqualitätsgrößen/Parameter bestmöglich zu erreichen.

Des Weiteren ist vorgesehen, dass das kognitive technische System die elektronische Analyse und Regelung der Prozessparameter zur elektronischen Steuerung der Mehrzahl von Prozessparametern mittels eines regelbasierten Expertensystem und eines Verfahren zur Informations- und Sensorfusion erfolgt.

Es werden also die Prozessparameter im laufenden Prozess erfasst und mittels einer Integration oder einer Informationsfusion unter Berücksichtigung des Expertensystems mathematisch weiter verarbeitet, sodass eine oder mehrere Ausgangsgrößen erzeugt werden, die zur Weiterverarbeitung im Prozess verwendet werden.

Fortbildungsgemäß ist weiterhin vorgesehen, dass eine Differenz zwischen den vorgegebenen Parametern für die Produktqualität und/oder den vorgegebene Parametern für die Anlagenauslastung und den elektronisch ermittelten Prozessparametern durch das kognitive technische System als Folge einer oder mehrerer Ursachen erkannt wird, wobei die Zuverlässigkeit und Eignung der elektronisch ermittelten Prozessparametern berücksichtig und überprüft wird.

Das System kann also nicht nur zwischen Ist- und Sollwert vergleichen und den Istwert verändern, sondern erkennt auch eventuell andern Ursachen für die Abweichung und ist daher in der Lage auch andere Parameter anzupassen. Deshalb sind die Zuverlässigkeiten der ermittelten Prozessparameter gewichtet. Hierbei ist auch vorgesehen, dass die Zuverlässigkeiten der Prozessparameter durch das kognitive technische System verändert werden, wenn beispielsweise festgestellt wird, dass die zur Anpassung der Prozessparameter herangezogenen Sensorwerte nicht optimal zur Optimierung beigetragen haben.

Vorteilhafterweise wird das Verfahren mittels Inlinemesstechnik kontinuierlich betrieben. Unter Inlinemesstechnik werden zum Beispiel elektronische/ optische/ magnetische/ kapazitive Sensoren und/oder Kamerasysteme und/oder Strahlungsspektroskopen verstanden, die während der Extrusion und innerhalb des Prozesses Daten erfassen.

Weiterbildungsgemäß ist vorgesehen, dass das regelbasierte Expertensystem die ermittelten Prozessparameter im Sinne der Wichtigkeit bei der Einstellung im laufenden Prozess mit oder ohne Verwendung von Algorithmen berücksichtigt. Das System kann also nicht nur einfach die ermittelten Prozessparameter verändern, sonder berücksichtig ihre Bedeutung bei der Auswirkung der Veränderung auf die Prozesssteuerung und nimmt daher eine Gewichtung vor. Es haben also die Prozessparameter mehr oder wenigere Einfluss auf die Steuerung des Prozesses.

Weiterhin ist vorgesehen, dass das regelbasierte Expertensystem zur automatischen Verfolgung der Optimierungstendenz, zur Verminderung der Objektkonflikte und zur automatisch elektronischen Steuerung und Regelung mit oder ohne Verwendung von Algorithmen dienen. Soll zum Beispiel die Geschwindigkeit der Extrusionslinie maximiert werden wird das System im Rahmen des Verfahrens zur Optimierung der Produktqualität immer vorrangig die Liniengeschwindigkeit berücksichtigen. Um Objektkonflikte zu vermeiden, ist das System in der Lage, beim obigen Beispiel nicht nur die Extruderdrehzahl zu erhöhen, sondern in Abhängigkeit dazu auch die Geschwindigkeit des Abzuges entsprechend anzupassen. Das elektronischen regelbasierten Expertendatenbank, welche qualitative und quantitative Zusammenhänge zwischen den Qualitätsmerkmalen und den Prozessparametern des Herstellprozesses ermittelt und bei der Optimierung multiobjektorientiert vorgeht, da die Faktoren entgegen gesetzten Auswirkungen auf die unterschiedlichen Qualitätsmerkmale haben.

In einer weiteren Fortbildung ist vorgesehen, dass das kognitive technische System den Erfolg der Regelung der Prozessparameter kontrolliert und bei Bedarf Regeln im regelbasierten Expertensystem durch eine lernende Umgebung eines evolutionären oder genetischen Algorithmus erzeugt, bewertet, ausgewählt, kombiniert und/oder verändert werden oder Bedienereingaben hinzuzieht. Dies kann lokal auf der Maschine oder über einen Zentralrechner der über ein Steuernetzwerk mit der Maschine kommuniziert erfolgen.

Nach dem zum Beispiel das System anhand der regelbaren Expertensystems in Verbindung mit der Information- und Sensorfusion die Prozessparameter verändert hat, überprüft es durch erneute Ermittlung der vorhandenen Prozessparameter die Auswirkung der Veränderung. Stellt das System fest, dass die durchgeführte Veränderung nicht zur Optimierung führt, wird es die im regelbaren Expertensystem hinterlegten Regeln entsprechend anpassen. Diese oder alle Regeln können selbstverständlich für die erneute Verwendung gespeichert werden. Kann das System keine sinnvolle Anpassung vornehmen, wird der Bediener anhand einer Bedienereingabe aufgefordert Entscheidung zu treffen, auf Basis dieser das System wiederum zum Beispiel über neuronale Netze die Anpassung vornehmen kann. Selbstverständlich kann der Bediener das kognitive technische System jederzeit zu Regeländerungen veranlassen, wenn er beispielsweise bestimmte Qualitätsprüfergebnisse des Labors in den Regelprozess einfliesen lassen möchte. Diese Daten können auch direkt über ein Datennetzwerk dem System zugeführt werden.

Die Trendverläufe der Prozessparameter aktueller und/oder zurückliegender Fertigungen werden elektronisch analysiert und durch den gleichzeitigen Zugriff auf die Fehler- und Expertendatenbank wird eine Gegenüberstellung von Prozessverlauf, Produktqualität und Einstellungsempfehlungen visualisiert.

Mögliche Zukunftssituationen des Extrusionsprozesses (z.B. veränderte Materialzusammensetzung) in Verbindung mit der aktuell vorliegenden Systemstrategie (z.B. Prozess mit maximaler Liniengeschwindigkeit, mit minimalem Leistungs- und/oder Ressourcenverbrauch oder maximaler Produktqualität) können simuliert werden. Die Simulation der Zukunftssituationen des Extrusionsprozesses beruht auf zuvor gewonnenem Wissen, welches in einer Expertendatenbank vorliegt. Eine endliche Anzahl von alternativen Plänen wird parallel generiert, welche notwendigen Veränderungen an den Aktoren der Extrusionslinie hinsichtlich der möglichen Situationen berücksichtigen und anschließend ein Vergleich der durchgeführten Simulation mit den tatsächlichen Werten der Sensoren stattfindet und ggf. eine Verhaltensanpassung stattfindet.

### Figurenbeschreibung:

Die Erfindung wird in den Figuren näher erläutert in der schematisch eine Extrusionsline dargestellt wird. Es zeigt:
- Fig. 1: Sensorpool an einer Extrusionslinie und
- Fig. 2: Das Qualitätsniveau über der Linineauslastung

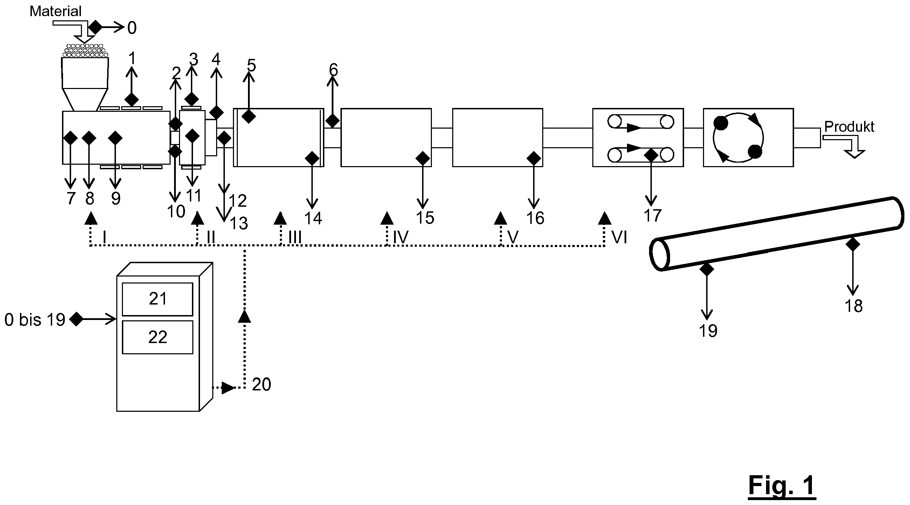

Figur 1 zeigt eine Extrusionslinie zur Produktion von beispielsweise Kunststoffrohren. Allgemein dienen Extrusionsanlagen der kontinuierlichen Verarbeitung thermoplastischer Kunststoffe zu Endlosprodukten wie Profile, Rohre oder Folien. Im Extruder wird das meist granulatförmige Rohmaterial mittels einer Schnecke gefördert, verdichtet und aufgeschmolzen bzw. plastifiziert und homogenisiert. Das Werkzeug, im Anschluss an den Extruder positioniert, bringt das Produkt in die gewünschte Form. Die Nachfolgeeinrichtungen dienen zum Kalibrieren, Abkühlen gleichmäßigen Abziehen und Aufnehmen der Kunststofferzeugnisse.

Heutige Automatisierungskonzepte für Extruder bzw. Extrusionslinien beinhalten die Temperatur-Regelung des Extruders, der Werkzeuge, der Kühl- und Kalibrierstrecken, die Steuerung/Synchronisierung der Antriebe, auf Kundenwunsch eine Massedruckregelung, Durchsatzregelung oder Metergewichtsregelung. Darüber hinaus ist die Anschlussfähigkeit von Peripheriegeräten sowie eine, häufig in einem Pult (Maschinensteuerung) zentralisierte, Bedienoberfläche realisiert.

Nur durch eine sinnvolle, flexible und modulare Automatisierung kann ein perfektes Zusammenspiel aller Komponenten einer Extrusionsanlage erreicht werden. Dabei werden heute die Aufgaben auf verschiedene spezialisierte Automationskomponenten verteilt. So übernehmen Module die Regelung der Zylindertemperaturen, der Frequenzumrichter enthält einen eigenen Prozessor, um den Antrieb optimal anzusteuern, die Drehzahl zu regeln und das Drehmoment zu überwachen. Eine zentrale SPS übernimmt die Koordination aller Komponenten. Abhängig von der Vernetzung der Linienkomponenten, der Einbindung der Sensorik (Sensorpool) und der Visualisierung des Prozesses ist die Produktqualität beeinflussbar. Die Prozessvisualisierung schafft hierbei die Verbindung zwischen Mensch und Maschine.

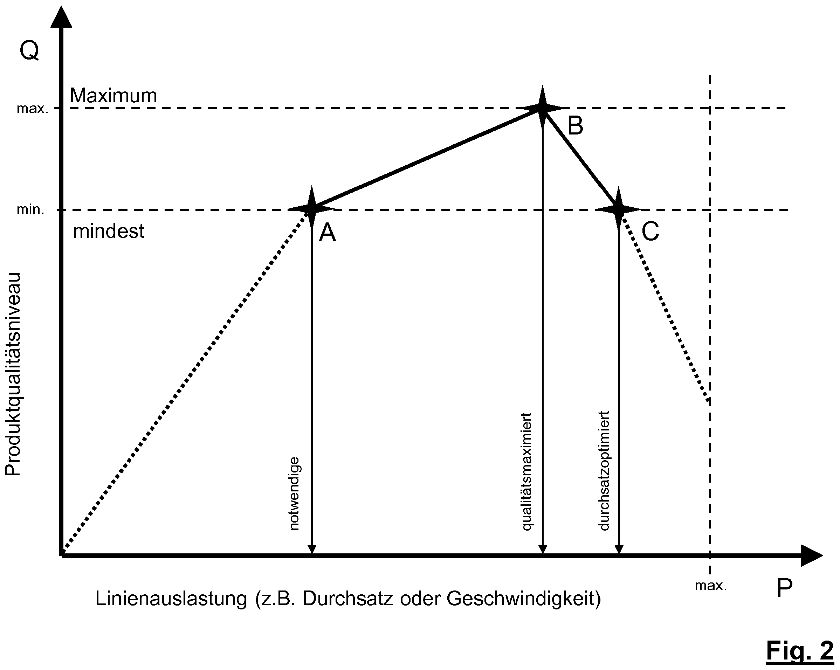

Unabhängig von den Prozessen innerhalb der Extrusionslinie wird heute der Eingangsmassestrom behandelt. Zwar findet man häufig eine Vernetzung zwischen der Dosierung und dem Extruder (Durchsatzregelung) jedoch ohne Detektierung der Eingangsstoffe. Mit Hilfe einer Materialerkennung 0 (IR-Spektroskopie) am Trichter wird es möglich den im System vorhandenen Kunststoff (Material) zu detektieren. Diese Information versetzt die Maschinensteuerung in die Lage, aus einer Vielzahl von Rezepten, dass für die anstehende Verarbeitung geeignetste auszuwählen. Unter "Rezept" werden in diesem Zusammenhang mindestens die mit einem Material verknüpften Temperatureinstellungen verbunden, ggf. weitere voreinstellbare Prozessparameter. Anhand dieser Auswahl werden die Zylinder- und Werkzeugtemperaturen voreingestellt, die max. zu erwartende Durchsatzleistung sowie der voraussichtliche e-Wert vorparametrisiert. Nach Eingabe der herzustellenden Produktabmaße oder Dimensionen und der Materialdichte oder der direkten Eingabe des Metergewichts ergibt sich die voraussichtlich Liniengeschwindigkeit der Anlage. Nach Inbetriebnahme der Linie wird der erste Betriebspunkt angefahren, bei dem sich ein ausreichendes Qualitätsniveau einstellt. Dieser erste Betriebspunkt ist in Figur 2 als Punkt A gekennzeichnet.

Die Figur 2 beschreibt hierbei das Qualitätsniveau über der Linienauslastung an einem theoretischen Beispielprozess aus der Kunststoffextrusion. Dieses Qualitätsniveau wird mittels der an der Extrusionslinie vorhandenen Sensorik (1, 2, 3, 4, 5, 10, 11, 13, 14, 15, 16, 17) erfasst, gespeichert und ggf. mit den Daten einer "historischen" Datenbank verglichen. Inhalte der historischen Datenbank können auch auf eingepflegtem praktischem Wissen beruhen. Neben diesen direkt erfassten Sensordaten, ergeben sich weitere daraus ableitbare Daten wie Drehzahl, Drehmoment und Energieeintrag (7, 8, 9). Darüber hinaus werden die qualitätsdefinierenden Größen ermittelt bzw. erfasst (6, 12, 18, 19).Dieser Informationsgehalt kann nun dazu genutzt werden, eine Sensorfusion innerhalb der Anlagensteuerung/ - regelung (21, 22) der Extrusionslinie zu etablieren. Die Sensorfusion liefert, entsprechend ihrer Transformationsfunktionen und der Informationszusätze der historischen Datenbank, neue Parametersätze zur Ansteuerung des nächsten oder der weiteren Betriebspunkte. Die Intelligenz die hinter der Generierung der Parametersätze steht, ist in der Programmierung der Transformationsfunktionen und Analysefunktionen der Steuerung/ Regelung implementiert. So kann beispielsweise aus der Analyse hervorgehen, dass eine höhere Linienauslastung (Liniengeschwindigkeit) verknüpft ist mit einer wahrscheinlichen Qualitätssteigerung. Die Transformationsfunktionen liefern zu diesem nächsten Betriebspunkt B den entsprechenden Parametersatz. Zur Ansteuerung des Punktes müssen mindestens die Parameter Extruderdrehzahl (7) und Abzugsgeschwindigkeit (17) verändert werden. Auch dieses Qualitätsniveau und die Linienauslastung werden durch die sich einstellenden Sensordaten erfasst und in der historischen Datenbank gespeichert. Der Betriebspunkt C kennzeichnet quasi einen Grenzpunkt bei dem die größte Linienauslastung bei minimaler zulässiger Produktqualität erreicht wird. Der Eingriff in den Prozess erfolgt über die Regelung (20), die die Signale an die Linienkomponenten I bis VI übergibt.

### Bezugszeichenliste:

- 0: Materialerkennung (IR-Spektroskopie)
- 1: Temperierung Extruder
- 2: Massetemperatur
- 3: Temperierung Werkzeug
- 4: Massespalterfassung
- 5: Druck Vakuumtank
- 6: Optische Produkterfassung (CAM1)
- 7: Extruderdrehzahl
- 8: Drehmoment
- 9: Spezifischer Energieeintrag
- 10: Massedruck
- 11: Innentemperierung
- 12: Optische Produkterfassung (CAM2)
- 13: Massetemperatur Innen
- 14: Kühlmitteltemperatur 1
- 15: Kühlmitteltemperatur 2
- 16: Kühlmitteltemperatur 3
- 17: Abzugsgeschwindigkeit
- 18: Optische Produkterfassung (CAM3)
- 19: Geometrische Produkterfassung
- 20: Regelung
- 21: Steuerung
- 22: Software (Analyse der Daten und Sensordaten z.B. mit Hilfe von Modellgesetzen)
- I: Regelung Extruder
- II: Regelung Werkzeug
- III: Regelung Vakuumtank
- IV - V: Regelung Kühlsysteme
- VI: Regelung Abzug

- A: Betriebspunkt min. Produktqualität, min. Linienauslastung
- B: Betriebspunkt max. Produktqualität
- C: Betriebspunkt min. Produktqualität, max. Linienauslastung

## Patentansprüche

1. Verfahren zur Optimierung der Produktqualität und/oder der Anlagenauslastung in Abhängigkeit vorgegebener Parameter,
wobei als vorgegebene Parameter für die Produktqualität optische, mechanische und/oder geometrischen Produktqualitätsgrößen und als
vorgegebene Parameter für die Anlagenauslastung Energieeintrag und Energieaustrag sind,
wobei anhand weiterer Eingangsgrößen die Optimierung vorgenommen wird,
**dadurch gekennzeichnet, dass**
die Optimierung anhand eines kognitiven technischen Systems mit wenigstens einer aus mehreren Elementen bestehenden Extrusionseinrichtung, die mit einer Mehrzahl von Prozessparametern elektronisch steuerbar ist, und
Einrichtungen zur elektronischen Ermittlung von wenigstens einem Teil der vorhandenen Prozessparameter der Elemente der Extrusionseinrichtung und
einer Einrichtung zur Analyse und Regelung der Mehrzahl der ermittelten Prozessparameter zur elektronischen Steuerung einiger Elemente der Extrusionseinrichtung unter Verwendung wenigstens eines Teils der ermittelten Prozessparameter,
wobei das kognitive technische System mit hybrider Planung und/oder Multiobjektorientierung arbeitet,
wobei die elektronische Analyse und Regelung der Prozessparameter zur elektronischen Steuerung mittels eines regelbasierten Expertensystem und eines Verfahren zur Informations- und Sensorfusion erfolgt,
wobei eine Differenz zwischen den vorgegebenen Parametern für die Produktqualität und/oder den vorgegebene Parametern für die Anlagenauslastung und den elektronisch ermittelten Prozessparametern durch das kognitive technische System als Folge einer oder mehrerer Ursachen erkannt wird wobei die Zuverlässigkeit und Eignung der elektronisch ermittelten Prozessparametern berücksichtigt und überprüft wird.

2. Verfahren nach Anspruch 1, **dadurch gekennzeichnet, dass** das Verfahren mittels Inlinemesstechnik kontinuierlich erfolgt.

3. Verfahren nach mindestens einem der Ansprüche 1 oder 2, **dadurch gekennzeichnet, dass** das regelbasierte Expertensystem die ermittelten Prozessparameter im Sinne der Wichtigkeit bei der Einstellung im laufenden Prozess mit oder ohne Verwendung von Algorithmen berücksichtigt.

4. Verfahren nach mindestens einem der Ansprüche 1 bis 4, **dadurch gekennzeichnet, dass** das regelbasierte Expertensystem zur automatischen Verfolgung der Optimierungstendenz, zur Verminderung der Objektkonflikte und zur automatisch elektronischen Steuerung und Regelung mit oder ohne Verwendung von Algorithmen dienen.

5. Verfahren nach mindestens einem der vorigen Ansprüche, **dadurch gekennzeichnet, dass** das kognitive technische System den Erfolg der Regelung der Prozessparameter kontrolliert und bei Bedarf Regeln im regelbasierten Expertensystem durch eine lernende Umgebung eines evolutionären oder genetischen Algorithmus erzeugt, bewertet, ausgewählt, kombiniert und/oder verändert werden.

6. Verfahren nach mindestens einem der vorigen Ansprüche, **dadurch gekennzeichnet, dass** das kognitive technische System den Erfolg der Regelung der Prozessparameter kontrolliert und bei Bedarf Regeln im regelbasierten Expertensystem durch Hinzuziehung von Bedienereingaben erzeugt, bewertet, ausgewählt, kombiniert und/oder verändert werden.

7. Verfahren nach mindestens einem der vorigen Ansprüche, **dadurch gekennzeichnet, dass** das kognitive technische System jederzeit durch den Bediener zu Regeländerungen veranlasst werden kann.

## Claims

1. Procedure for the optimization of product quality and/or capacity utilization depending on specified parameters,
such specified parameters for product quality comprising optical, mechanical and/or geometrical dimensions of product quality and
specified parameters for capacity utilization being energy input and energy output, optimization being achieved via further input variables,
**characterized in that**
optimization is achieved by means of a cognitive technical system with at least one extrusion device comprising several elements which in turn can be controlled electronically through a number of process parameters, and
by means of installations for electronic identification of at least part of the given process parameters of the elements of the extrusion device, and
by means of a tool for the analysis and control of the majority of the identified process parameters for the electronic control of several elements of the extrusion by reference to at least part of the identified process parameters,
the cognitive technical system operating with hybrid planning and/or multi-object-orientation,
the electronic analysis and control of the process parameters for electronic control being achieved by reference to a rule-based expert system and a process for information and sensor fusion,
a difference between the specified parameters for product quality and/or the specified parameters for capacity utilization und the electronically identified process parameters being identified by the cognitive technical system as a consequence of one or more causes,
reliability and suitability of the electronically identified process parameters being taken into account and verified.

2. Procedure according to claim 1, **characterized in that** the process takes place continually by means of inline measurement.

3. Procedure according to at least one of the claims 1 or 2, **characterized in that** the rule-based expert system takes into account the identified process parameters according to their importance of regulation during operation with or without the application of algorithms.

4. Procedure according to at least one of the claims 1 to 3, **characterized in that** the rule-based expert system is designed for the automatic monitoring of the tendency to optimization, for a reduction of object conflicts, and for automatic electronic control and regulation with or without the application of algorithms.

5. Procedure according to at least one of the preceding claims, **characterized in that** the cognitive technical system controls the success of the regulation of the process parameters and that, when required, rules within the rule-based expert system are generated, assessed, selected, combined and/or changed by reference to the learning environment of an evolutionary or genetic algorithm.

6. Procedure according to at least one of the preceding claims, **characterized in that** the cognitive technical system controls the success of the regulation of the process parameters and that, when required, rules within the rule-based expert system are generated, assessed, selected, combined and/or changed by involving operator input.

7. Procedure according to at least one of the preceding claims, **characterized in that** the cognitive technical system can at any time be caused by the operator to change rules.

## Revendications

1. Procédé pour optimiser la qualité des produits et/ou l'utilisation du système en fonction de paramètres prédéfinis,
les paramètres de qualité des produits comprenant des dimensions optiques, mécaniques et/ou géométriques, et
les paramètres d'utilisation du système étant l'apport énergétique et le rendement énergétique,
l'optimisation étant réalisée en moyen sur la base d'autres valeurs d'entrée,
**caractérisé en ce que**
l'optimisation s'effectue au moyen d'un système cognitif technique avec au un dispositif d'extrusion comprenant plusieurs éléments et qui peut être contrôlé électroniquement en fonction d'un nombre de paramètres de processus et
au moyen de dispositifs pour la détermination électronique au moins d'une partie desdites paramètres de processus des éléments du dispositif d'extrusion et
au moyen d'un dispositif pour l'analyse et le contrôle dudit nombre de paramètres de processus déterminés pour le contrôle électronique de plusieurs éléments du dispositif d'extrusion en fonction au moins d'une partie des paramètres de processus déterminés,
le système cognitif technique fonctionnant à la planification hybride et/ou à l'orientation multi-objet,
l'analyse et le contrôle électroniques des paramètres de processus pour le contrôle électronique se faisant en fonction d'un système expert basé sur des règles et d'un procédé de fusion d'informations et de capteurs,
une différence entre les paramètres prédéfinis de la qualité des produits et/ou les paramètres prédéfinis d'utilisation du système et les paramètres de processus déterminés de manière électronique est reconnue comme conséquence d'une ou de plusieurs causes par le système cognitif électronique,
la fiabilité et l'aptitude des paramètres de processus déterminés de manière électronique étant prises en compte et vérifiées.

2. Procédé selon la revendication 1, **caractérisé en ce que** le procédé est effectué continuellement.

3. Procédé selon au moins l'une quelconque des revendications 1 ou 2, **caractérisé en ce que** le système expert basé sur des règles prend en compte les paramètres de processus déterminés en fonction de leur importance pour le réglage lors du processus en cours avec ou sans recours à des algorithmes.

4. Procédé selon au moins l'une quelconque des revendications 1 à 4, **caractérisé en ce que** le système expert basé sur des règles sert au suivi automatique de la tendance à optimisation, à la réduction de conflits d'objet et au réglage et contrôle électroniques automatisés avec ou sans recours à des algorithmes.

5. Procédé selon au moins l'une quelconque des revendications précédentes, **caractérisé en ce que** le système expert basé sur des règles contrôle le succès du réglage des paramètres de processus et, au besoin, génère, évalue, choisit, combine et/ou change des règles dans le système expert basé sur des règles en fonction de l'environnement à capacité d'apprentissage d'un algorithme évolutionnaire ou génétique.

6. Procédé selon au moins l'une quelconque des revendications précédentes, **caractérisé en ce que** le système expert basé sur des règles contrôle le succès du réglage des paramètres de processus et, au besoin, génère, évalue, choisit, combine et/ou change des règles dans le système expert basé sur des règles par recours à des commandes de l'opérateur.

7. Procédé selon au moins l'une quelconque des revendications précédentes, **caractérisé en ce que** l'opérateur peut à tout moment indiquer au système cognitif électronique un changement de règles.
